Europäisches Patentamt

European Patent Office

Office européen des brevets

(19)

(11) Publication number: 0 371 935
A1

(12) EUROPEAN PATENT APPLICATION

(21) Application number: 89830527.1

(22) Date of filing: 28.11.89

(51) Int. Cl.5: B60T 15/24, B60T 13/26, B60T 17/18

(30) Priority: 30.11.88 IT 6807288

(43) Date of publication of application:
06.06.90 Bulletin 90/23

(84) Designated Contracting States:
AT BE DE ES FR GB IT NL SE

(71) Applicant: INDUSTRIE MAGNETI MARELLI S.r.l.
Via Adriano 81
I-20128 Milano(IT)

(72) Inventor: Angelillo, Domenico
Via Pisa, 54
I-20099 Sesto S. Giovanni (Milano)(IT)

(74) Representative: Quinterno, Giuseppe et al
c/o Jacobacci-Casetta & Perani S.p.A. Via
Alfieri, 17
I-10121 Torino(IT)

(54) A valve unit for controlling the braking of a trailer and a braking system including the valve unit.

(57) A valve unit comprises a body (20) in which a valve (80,81) is provided for controlling communication between a supply chamber (C) which is intended to be connected to a compressed-air supply (3) and an outlet aperture (122) connected to a line for operating the braking of the trailer. The valve (80,81) is operable as a result of an increase in pressure in a first (A) and/or a second control chamber (B) defined in the body (20), and/or as a result of a decrease in pressure in a third control chamber (D). In particular, the valve (80,83) includes a control element (60) which is movable in the body (20) and is subject to the action of the opposing pressures in the second and third control chambers (B,D).

The valve unit has a safety device (200) for cutting off the pressure supply to the third control chamber (D) and putting the third chamber (D) into communication with the supply chamber (C) when the pressure in the first control chamber (A) falls below a predetermined value during service braking.

FIG. 1

## A valve unit for controlling the braking of a trailer and a braking system including the valve unit

The present invention relates to a valve unit for controlling the braking of a trailer.

More specifically, the subject of the invention is a valve unit comprising a valve body in which a valve is provided for controlling the communication between a supply chamber which is intended to be connected to a compressed-air supply and an outlet aperture connected to a line for operating the braking of the trailer, the valve being operable as a result of a pressure increase in a first and/or a second control chamber defined in the body, and/or as a result of a decrease in pressure in a third control chamber, the valve including a control element which is movable in the body and is exposed to the action of the opposing pressures in the second and third control chambers.

The valve unit according to the invention is characterised in that it has a safety valve device for cutting off the pressure supply to the third control chamber and for putting the third chamber into communication with the supply chamber when the pressure in the first chamber falls below a predetermined value during service braking.

The safety valve device may conveniently be formed integrally with the valve body of the valve unit, or may alternatively be physically separate and distinct from the valve unit and connected thereto by piping.

Further characteristics and advantages of the present invention will become clear from the detailed description which follows with reference to the appended drawings, provided by way of non-limiting example, in which:

Figure 1 is a diagram which shows part of a pneumatic braking system of a motor vehicle adapted to tow a trailer, the system including a valve unit with a safety device according to the present invention,

Figure 2 is an axial section of a safety device for the valve unit according to the invention and produced in a form in which it is separate and distinct from the valve unit, and

Figure 3 is an axial section which shows a valve unit according to the invention with an integral safety device.

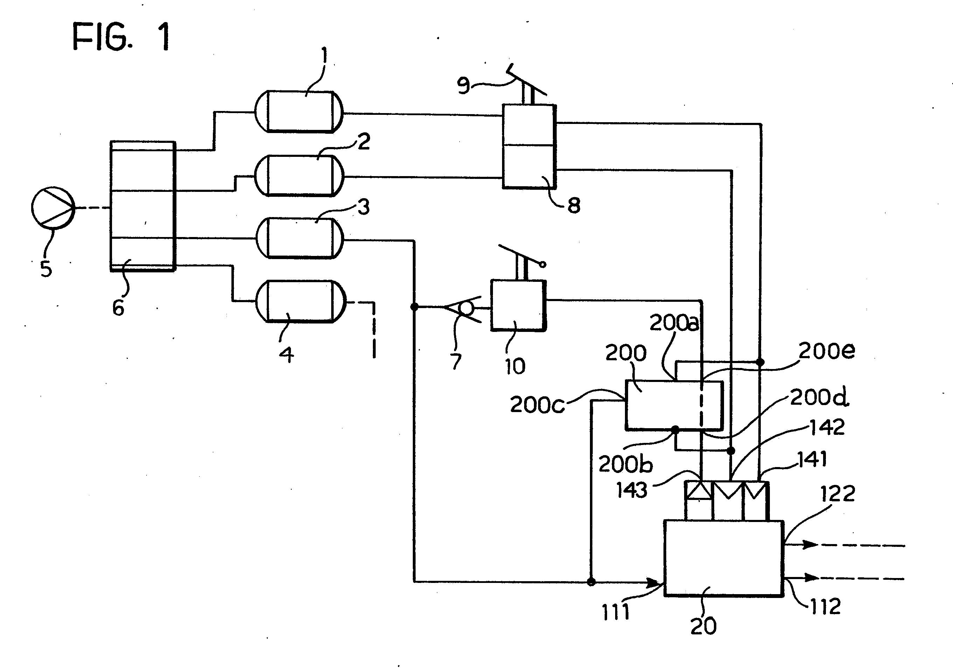

The braking system shown in Figure 1 includes a plurality of reservoirs 1 to 4 which store compressed air produced by means of a compressor 5.

A safety valve with four sections, indicated 6, and has the function of distributing the compressed air produced by the compressor 5 between the four independent circuits connected to the reservoirs 1 and 4 and, in the event of damage in one circuit, of enabling the undamaged circuits to be supplied up to a certain safe pressure value. This valve may be constituted, for example, by the valve produced and marketed by the Applicant under the trade reference VPS 41.

Typically, the safety valve 6 is formed so as to enable the pressure to be supplied to the reservoirs 1 and 4 when the air pressure supplied at its input exceeds a predetermined value, for example 7.5 bars. The valve is also formed so that, in the event of damage to one circuit, it enables the undamaged circuits to be supplied until a calibrated value lower than the previous value, for example 4.5 bars, is reached.

A two-section distributor, indicated 8, is operable by means of a pedal 9 to control the service braking in the front and rear braking circuits of the vehicle and the trailer. The distributor 8 is therefore of the duplex or tandem type and has its inlets connected to the reservoirs 1 and 2. The outlets of the two sections of the distributor 8 are connected, in a manner not shown, to the braking elements of the vehicle, also not shown.

A manually-operated distributor for controlling the parking and emergency braking is indicated 10 and is connected to the reservoir 3 with the interposition of a non-return valve 7. The braking system of Figure 1 also includes a valve unit 20 for controlling the braking of a trailer (if any) towed by the tractor unit. This valve unit is of known type, for example, as described in European patent application No. No EP-A-O 277 465 and has an inlet 111 connected to the reservoir 3, an outlet 112 connected (in a manner not shown) to a line for supplying pressure to the reservoirs of the braking system of a trailer, and an outlet 122 connected (also in a manner not shown) to a line (known as a moderable line) for operating the braking of the trailer.

The valve unit 20 has two further inlets 141, 142 connected respectively to the outlets of the first and second sections of the duplex distributor 8. A further aperture 143 of the valve device 20 is connected to the outlet of the manual distributor 10.

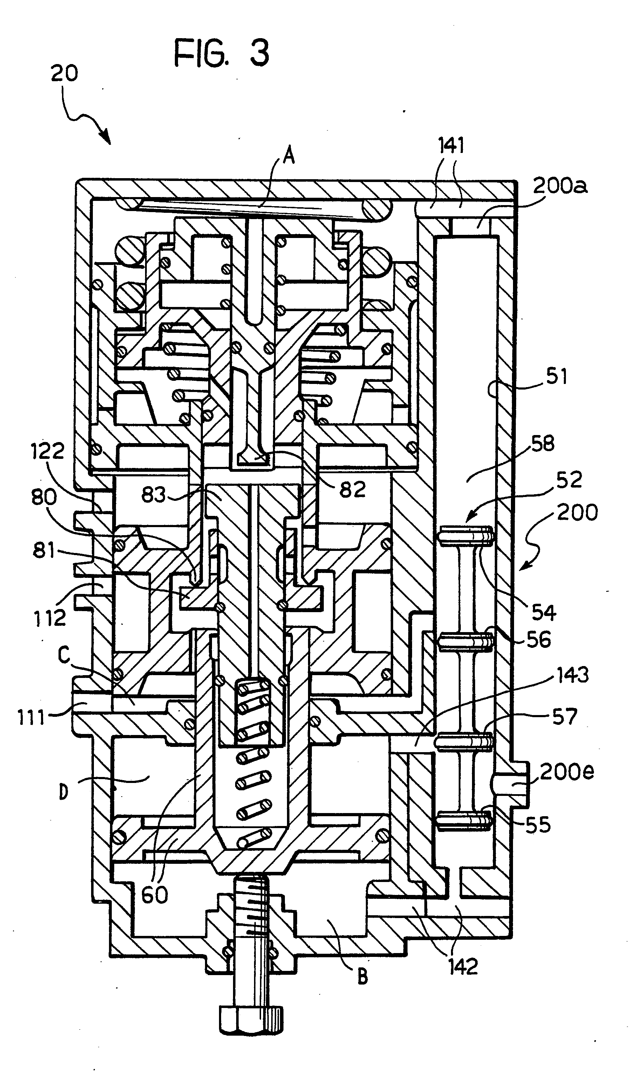

The inlet connector 111 of the valve device 20 opens into a supply chamber (indicated C in Figure 3) within the body . The apertures 141, 142 and 143 of the device communicate respectively with first, second and third control chambers in the body of the device itself (indicated A, B and D in Figure 3).

In operation, in the rest condition, that is, when neither the service braking nor the parking and emergency braking is operated, the chambers of the valve device 20 which communicate with the apertures 141 and 142 are at atmospheric pressure, whilst the third control chamber, that is, the one which communicates with the apertures 143, is kept under pressure.

The valve (indicated 80 and 81 in Figure 3) within the valve device 20 can be opened in order to effect the braking of the trailer by the application of a pressure to the aperture 141 and/or to the aperture 142, or by a reduction in pressure in the control chamber which communicates with the aperture 143.

Typically, the valve within the valve device 20 includes a control element (indicated 60 in Figure 3) which is exposed to the action of the opposing pressures in the second and third control chambers (B and D) defined above.

During service braking, as a result of the operation of the duplex distributor 8, pressure is supplied to the apertures 141 and 142 of the valve device 20. this device consequently supplies an outlet pressure through its aperture 122 to effect the braking of the trailer.

During parking and emergency braking, as a result of the operation of the manual distributor 10, the control chamber (D) which communicates with the aperture 143 of the valve device 20 is put into communication with an exhaust aperture so as to cause a rapid drop in pressure in the chamber.

During service braking, as during parking braking, the movable control element (60) of the valve (80, 81) of the valve device 20 moves (upwards in the embodiment shown in Figure 3) in order to open the valve (80, 81).

In the event of damage, that is, of pressure loss, in one of the four circuits connected to the outlets of the safety valve 6, the pressures in the reservoirs of the undamaged circuits are brought to a lower value than normal, for example, to the value of 4.5 bars mentioned above. In this case, however, the pressure downstream of the manual distributor 10 (and hence of the chamber of the valve unit 20) remains higher, for example at 7-7.5 bars, because of the non-return valve 7.

This may lead to wholly unsatisfactory braking conditions.

Suppose, for example, that the pressure in the reservoir 1 falls to zero as a result of damage: the operation of the safety valve 6 prevents the reservoirs 2 to 4 from being emptied but the pressure therein falls, for example, to a value of 4.5 bars. The pressure in the chamber (D) which communicates with the aperture 143, however, will remain higher, for example at 7-7.5 bars, as a result of the action of the non-return valve 7.

If the duplex distributor 8 is operated in this condition, no pressure is applied at the port 141 of the valve device 20, whilst a pressure equal to 4.5 bars at most is applied to the inlet connector 142. Consequently, the force acting on the movable control element (60) of the valve (80, 81) within the valve device 20 is very small and the braking pressure which the valve device 20 can supply at its outlet 122 is consequently reduced. This clearly causes unsatisfactory braking.

According to the invention, the problem described above is avoided by the use of a safety valve device, indicated 200 in Figure 1, interposed between the manual distributor 10 and the aperture 143 of the device 20. The safety device 200 has five apertures, indicated 200a to 200e. The apertures 200a to 200d communicate in order with the apertures 141, 142, 111 and 143 of the valve device 20. The aperture 200e of the safety device, however, is connected to the manual distributor 10.

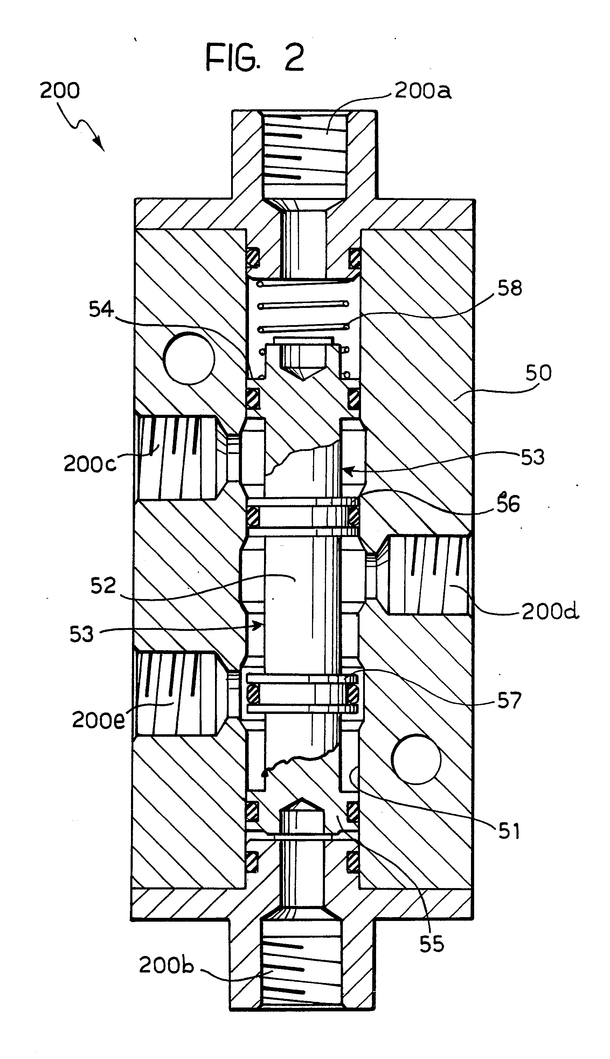

In the embodiment illustrated in Figure 2, the safety device 200 is separate and distinct from the valve device 20 and comprises a body 50 formed with an axial duct 51 in the opposite ends of which two connectors constituting the aforementioned apertures 200a and 200b are inserted.

A distributor piston 52 is mounted in the duct 51 of the body 50 and comprises a rod 53 with two end heads 54 and 55 which are sealingly slidable in the end portions of the duct and face the connectors 200a and 200b.

One side of the body 50 has two apertures, indicated 200c and 200e in Figure 2, which open into the duct 51 in axially spaced positions. A further aperture 200d is formed in the opposite side of the body 50 and opens into the duct 51 in the region intermediate the apertures 200c and 200e.

The piston 52 has two further intermediate heads, indicated 56 and 57.

A helical spring 58 is interposed between an end surface of the connector 200a and the head 54 of the piston 52. When no compressed air is supplied to the apertures 200a and 200b, the spring 58 keeps the piston 52 in the position shown in Figure 2, in which the head 56 sealingly engages an axial portion of the passage 51 between the apertures 200c and 200d which are disconnected from each other. In the same condition, the head 57 of the piston is situated in a radially wider portion of the duct 51 and enables communication between the apertures 200e and 200d.

If the braking system of the tractor shown in Figure 1 is in perfect working order, the piston 52 also remains substantially in the position shown in Figure 2 during service braking or parking or emergency braking.

If no pressure is supplied to the inlet connector 200a of the safety device 200 during a service braking stage (for example, as a result of damage to the circuit of the tractor associated with the pressure reservoir 1 in Figure 1), the piston 52 moves upwards as a result of the prevailing action exerted thereon by the pressure supplied to the inlet connector 200b. The piston 52 consequently moves to a working position, not illustrated, in which the head 56 is in a radially wider portion of the duct 51 and enables communication between the aperture 200d and the aperture 200c of the safety device. At the same time, the head 57 of the piston 52 sealingly engages an axial portion of the duct 51 between the apertures 200e and 200d, disconnecting them from each other. As a result of the above-described movement of the control piston, the pressure in the third control chamber (D) of the valve unit 20 is brought to the pressure of the circuit which supplies air to the inlet 111 of the valve device 20. Consequently, effective braking can be achieved, even with a lower pressure available in the second control chamber (B) of the device 20, that is, in the chamber into which the inlet aperture 142 opens.

Figure 3 shows an embodiment in which the valve device 20 and the safety device 200 are integrated in a single unit. In this drawing, parts and components already described above have been given the same reference numerals.

The integral valve unit shown in Figure 3 operates in exactly the same way as already described above with reference to Figure 2, and will not therefore be described further.

## Claims

1. A valve unit for controlling braking of a trailer, comprising a body (20) in which a valve (80, 81) is provided for controlling the communication between a supply chamber (C) which is intended to be connected to a compressed-air supply (3) and an outlet aperture (122) connected to a line for operating the braking of a trailer, the valve (80, 81) being operable as a result of a pressure increase in a first (A) and/or a second (B) control chamber defined in the body (20), and/or a second (B) control chamber defined in the body (20), and/or as a result of a decrease in pressure in a third control chamber (D), the valve including a control element (60) which is movable in the body (20) and is exposed to the action of the opposing pressures in the second and third control chambers (B, D), characterised in that a safety valve device (200) is provided for cutting off the pressure supply to the third control chamber (D) and for putting the third chamber (D) into communication with the supply chamber C) when the pressure in the first chamber (A) falls below a predetermined value during service braking.

2. A valve unit according to Claim 1, characterised in that the safety valve device (200) includes a body (50) defining a duct (51) the ends (200a, 200b) of which communicate with the first and second control chamber (A, B) respectively, and which has in its intermediate portion first and second apertures (200c, 200d) communicating with the supply chamber (C) and with the third chamber (D) respectively and a third aperture (200e) for the inlet of compressed air destined for the third control chamber (D), a distributor piston (52) being sealingly slidable in the duct (51) with its end surfaces (54, 55) subject to the pressures in the first and second control chambers (A, B) respectively, the piston (52) assuming a rest position in which it prevents communication between the first aperture (200c) and the other apertures (200a, 200b, 200d, 200e) of the duct (51) when the pressure in the first control chamber (A) exceeds a predetermined value during service breaking, and a working position in which it disconnects the second and third apertures (200d, 200e) of the duct (51) from each other and puts the first and second apertures (200d, 200e) into communication with each other, when the pressure in the first control chamber (A) falls below a predetermined value during service braking.

3. A valve unit according to Claim 1 or Claim 2, characterised in that the safety valve device (200) is physically separate and distinct from the body (20) of the valve unit and is connected thereto by piping.

4. A value unit according to Claim 1 or Claim 2, characterised in that the safety device (200) is integrated in the body of the valve unit (20).

5. A braking system for a vehicle adapted to tow a trailer, comprising a valve unit for controlling the braking of the trailer, according to one or more of the preceding claims.

FIG. 1

EP 0 371 935 A1

# FIG. 2

# FIG. 3

| | European Patent Office | EUROPEAN SEARCH REPORT | Application Number |
|---|---|---|---|

EP    89 83 0527

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-3444639 (WABCO WESTINGHOUSE)<br>* page 28, line 28 - page 30, line 22; figures 1, 2 *<br>--- | 1 | B60T15/24<br>B60T13/26<br>B60T17/18 |
| A | FR-A-2297157 (GRAUBREMSE GMBH)<br>* page 5, line 13 - page 7, line 8; figure 1 *<br>--- | | |
| A,D | EP-A-277465 (INDUSTRIE MAGNETI MARELLI)<br>----- | | |
| | | | TECHNICAL FIELDS SEARCHED (Int. Cl.5 ) |
| | | | B60T |

The present search report has been drawn up for all claims

| Place of search | Date of completion of the search | Examiner |
|---|---|---|
| THE HAGUE | 09 MARCH 1990 | HARTEVELD C.D.H. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P0401)